# EUROPÄISCHE PATENTANMELDUNG

(11) **EP 4 592 703 A1**
(43) Veröffentlichungstag der Anmeldung: **30.07.2025**
(21) Anmeldenummer: 24153495.7
(22) Anmeldetag: 23.01.2024
(51) Int. Cl.: G01S 7/481, G01S 17/42

(54) **ERFASSUNG VON OBJEKTEN IN EINEM ÜBERWACHUNGSBEREICH**

(71) Anmelder: SICK AG, 79183 Waldkirch (DE)
(72) Erfinder: Fölling, Jonas, 79100 Freiburg (DE); Buser, Roger, 79341 Kenzingen (DE); Bödewadt, Jörn, 20144 Hamburg (DE); Hölling, Andy, 22529 Hamburg (DE); Bayesteh, Shima, 20097 Hamburg (DE)

(57) **Zusammenfassung**

Es wird ein optoelektronischer Sensor (10) zur Erfassung von Objekten in einem Überwachungsbereich (22) angegeben, der einen Lichtempfänger (36) zum Erzeugen eines Empfangssignals aus Empfangslicht (26) aus dem Überwachungsbereich (22), eine Empfangsoptik (28) zum Lenken des Empfangslichts (26) auf den Lichtempfänger (36) mit einem auf einen Nutzlichtwellenlängenbereich abgestimmten optischen Filterelement (34, 35) zur Unterdrückung von Fremdlicht und eine Steuer- und Auswertungseinheit (48) zur Erfassung von Informationen über Objekte in dem Überwachungsbereich (22) anhand des Empfangssignals aufweist. Dabei umfasst das optische Filterelement (34, 35) mindestens zwei Filterzonen (34a-b, 35a-b), und eine jeweilige Filterzone (34a-b, 35a-b) ist in ihrer Abstimmung auf den Nutzlichtwellenlängenbereich individuell an den Einfallswinkel eines Teillichtbündels des Empfangslichts (26) auf die Filterzone (34a-b, 35a-b) angepasst.

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 13.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen. Diese Art der Abstandsmessung wird auch als ToF (Time of Flight) oder LIDAR (Light Detection and Ranging) bezeichnet.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

In den meisten Fällen und besonders bei der Entfernungsmessung muss der Sensor zwischen Nutzlicht und Umgebungslicht oder Störungen von anderen Lichtquellen unterscheiden können. Je nach Anwendung, etwa in besonders hellen Umgebungen, bei schlecht remittierenden Zielobjekten oder großen Messentfernungen, kann dies bei äußerst geringem Nutzlichtpegel eine sehr anspruchsvolle Aufgabe sein.

Fremdlicht lässt sich mit Hilfe eines optischen Bandpassfilters unterdrücken, das auf die Wellenlänge des Nutzlichts und insbesondere des Sendelichts abgestimmt ist. Je schmalbandiger das Bandpassfilter ausgeführt ist, ohne dabei Nutzlicht zu dämpfen, umso größer wird der Vorteil. Allerdings verändert sich der Durchlassbereich des Bandpassfilters mit dem Einfallswinkel. Das einfallende Licht bildet in aller Regel kein paralleles Strahlenbündel, so dass ein sehr schmaler Durchlassbereich nicht für alle Strahlbündelanteile mit ihren unterschiedlichen Einfallswinkeln passen würde. Aus diesem Grund wird herkömmlich der Durchlassbereich des Bandpassfilters mit einer Reserve ausgelegt, die die unterschiedlichen Einfallswinkel toleriert. Dadurch trifft dann mehr unerwünschtes Fremdlicht auf den Sensor.

Die EP 3 654 056 A1 offenbart einen Lichttaster mit einer SPAD-Matrix als Lichtempfänger. Ein vorgeordnetes Filter weist mehrere Filterbereiche mit jeweils sehr schmalem Durchlassbereich auf, die sich einen Toleranzwellenlängenbereich in etwa gleichmäßig aufteilen. Die betrachteten Toleranzen sind hier aber Temperatureffekte und ähnliche Driften, nicht der Einfallswinkel, auf den das Dokument und dessen Design nicht eingehen. Außerdem sorgen die Filterbereiche keineswegs dafür, dass alles Nutzlicht auf den Lichtempfänger trifft, es wird nur dafür gesorgt, dass auch bei Driften wenigstens einige SPADs zu einem zufällig gerade zu der Drift passenden Filterbereich sehr sauber gefiltertes Nutzlicht empfangen. Dadurch geht sehr viel Nutzlicht an den anderen Filterbereichen verloren.

Die EP 3 699 640 A1 nutzt eine Verstelleinrichtung, um den Durchlassbereich eines Filters durch Schrägstellen zu verschieben. Das löst aber das Problem nicht, weil damit nur ein globaler Winkel und damit ein einziger Durchlassbereich einstellbar ist, der weiterhin nicht oder nur mit den Nachteilen einer Reserve zu Strahlbündelanteilen mit unterschiedlichem Einfallswinkel passt.

In der EP 3 859 379 A1 wird eine besondere Empfangsoptik eingesetzt, die auf ringförmiges Bildfeld zu einem bestimmten Bildfeldwinkel optimiert ist. Ein optisches Filter wird auf den entsprechenden nicht senkrechten Einfallswinkel angepasst. Auch dieses Filter leistet keinen Beitrag zum Umgang mit nicht-parallelen Strahlbündeln unterschiedlicher Einfallswinkel.

Aus der EP 4 071 504 A1 ist ein Laserscanner mit einem Faltspiegel und dadurch einem besonders kompakten Empfangsstrahlengang bekannt. Das Dokument stellt dies so dar, als würde durch diese günstige optische Konstellation die Variation der Einfallswinkel so gering, dass ein Bandpassfilter mit einem sehr schmalen Durchlassbereich eingesetzt werden kann. Maßnahmen in der Auslegung des Filters zur Abdeckung verschiedener Einfallswinkel sind also sogar absichtlich nicht getroffen. Tatsächlich ist aber weiterhin eine Reserve erforderlich, dies umso mehr, je kompakter das Gerät wird, denn dadurch gibt es wieder einen größeren Umfang unterschiedlicher Einfallswinkel.

In der US 2020/0116831 A1 wird ein LIDAR-Gerät vorgestellt, in dem das Filter drehbar angeordnet ist, um den Einfallswinkel des Strahls zu minimieren. Das ist eine Lösung, die sich nicht für alle Gerätedesigns eignet und die im Übrigen das Problem unterschiedlicher Einfallswinkel vermeidet und nicht löst.

Ein LIDAR-Gerät gemäß US 2021/0364603 A1 setzt eine Filterschicht in einen Zwischenraum zwischen zwei Linsen, in dem das Strahlenbündel weitgehend parallelisiert ist, so dass ein schmalerer Durchlassbereich ausreicht, um die Einfallswinkel abzudecken. Dieses Vorgehen eignet sich nicht, wenn es keinen solchen Zwischenraum gibt, und es bedarf weiterhin einer wenn auch verminderten Reserve, um die verbleibenden Einfallswinkel zu berücksichtigen.

In der WO 2020/243130 A1 wird eine Beleuchtungsquelle eingesetzt, deren Wellenlängen vom Zentrum zum Rand des Sichtfeldes abnehmen, um der Verschiebung des Durchlassbereichs eines Interferenzfilters zu folgen, der nur bestimmte Wellenlängen zu den Detektoren durchlässt. Dies setzt aber eine aufwändige Beleuchtung voraus, und die verschiedenen Wellenlängen sind auch nicht unbedingt in allen Anwendungen gewünscht.

Es ist daher Aufgabe der Erfindung, die Unterdrückung von Fremdlicht in einem optoelektronischen Sensor weiter zu verbessern.

Diese Aufgabe wird durch einen optoelektronischen Sensor und ein Verfahren zur Erfassung von Objekten in einem Überwachungsbereich nach Anspruch 1 beziehungsweise 13 gelöst. Mit einem Lichtempfänger wird aus einfallendem Empfangslicht ein Empfangssignal erzeugt. Das Empfangssignal wird in einer Steuer- und Auswertungseinheit ausgewertet, um eine optisch erfassbare Information über das Objekt zu gewinnen, wie eine binäre Anwesenheitsinformation, einen Abstand, eine Position oder auch eine Farbe. Dem Lichtempfänger ist eine Empfangsoptik vorgeordnet, die eine Strahlformung und vorzugsweise Bündelung vornimmt und dazu bevorzugt mindestens eine Empfangslinse aufweist. Als Teil der Empfangsoptik ist ein optisches Filterelement vorgesehen, wobei die Zuordnung zu der Empfangsoptik daher rührt, dass das Filterelement im Empfangspfad auf das Empfangslicht einwirkt, eine besondere räumliche Positionierung oder Verbindung mit Elementen der Empfangsoptik ist damit zunächst nicht impliziert. Das Filterelement ist auf einen Nutzlichtwellenlängenbereich abgestimmt und sorgt also dafür, dass möglichst nur Empfangslicht in dem Nutzlichtwellenlängenbereich auf den Lichtempfänger trifft und Fremdlicht absorbiert oder abgelenkt wird.

Die Erfindung geht von dem Grundgedanken aus, das Filterelement in mindestens zwei Filterzonen zu unterteilen. Das Empfangslicht kann gedanklich in Teillichtbündel unterteilt werden, die jeweils einer Filterzone zugeordnet sind. Die Teillichtbündel weisen, wenn das Empfangslicht nicht perfekt parallel ist, je nach Filterzone unterschiedliche Einfallswinkel auf. Die Filtereigenschaften zur Abstimmung an den Nutzlichtwellenlängenbereich sind in den Filterzonen unterschiedlich, um die Abhängigkeit vom Einfallswinkel mindestens teilweise auszugleichen. Effektiv wird also trotz der unterschiedlichen Einfallswinkel von den Filterzonen dasselbe Nutzlichtspektrum ausgeschnitten.

Die Erfindung hat den Vorteil, dass Fremdlicht besonders effizient unterdrückt wird. Im Gegensatz zu einigen der oben diskutierten herkömmlichen Ansätze bedarf es dafür keiner Maßnahmen, um den Einfallswinkelbereich zu beschränken, obwohl dies natürlich in Kombination zusätzlich möglich bleibt. Ein in Filterzonen eingeteiltes Filterelement kann auch dann verwendet werden, wenn das Optikdesign keine zugängliche Stelle aufweist, an der das Licht kollimiert auftritt. Diese Freiheit, das Filterelement zu platzieren, kann dafür genutzt werden, einen Ort zu finden, an dem der Strahldurchmesser gering ist, ohne zu beachten, ob es an diesem Ort auch zumindest weitgehend parallelisiert ist oder nicht. Dadurch kann ein kleines, weniger kostenintensives Filterelement verwendet werden.

Das optische Filterelement ist bevorzugt ein Bandpassfilter. Der Durchlassbereich lässt sich demnach durch eine untere und obere Grenze oder alternativ eine Mittenfrequenz angeben, um die der Durchlassbereich meist in etwa symmetrisch liegt. Ein Bandpassfilter ist besonders geeignet, Fremdlicht zu unterdrücken, indem es Licht sowohl zu kleiner als auch zu großer Wellenlängen ausschließt. Es sei betont, dass "Durchlassbereich" in einem etwas weiteren Sinne zu verstehen ist, denn das Filterelement kann auch reflexiv arbeiten. Dann durchdringt gerade nur das Fremdlicht das Filterelement und nicht das Nutzlicht, wobei aber nur das Nutzlicht zum Lichtempfänger gelangt und in diesem Sinne exklusiv durchgelassen wird.

Eine jeweilige Filterzone weist bevorzugt einen Durchlassbereich mit einer Halbwertsbreite von höchstens 40 nm, höchstens 30 nm, höchstens 20 nm oder höchstens 10 nm auf. Das sind einige Werte für einen nach herkömmlichem Maßstab mit Reserve für Toleranzen unterschiedlicher Einfallswinkel zu schmalen Durchlassbereich. Da die Filterzonen an die Einfallswinkel angepasst sind, bedarf es einer solchen Reserve nicht, der Durchlassbereich kann so schmal gewählt werden.

Der Sensor weist bevorzugt einen Lichtsender zum Aussenden eines Lichtsignals in den Überwachungsbereich mit einer Wellenlänge in dem Nutzlichtwellenlängenbereich auf. Der Nutzlichtanteil in dem Empfangslicht ist also das wieder empfangene Lichtsignal des eigenen Lichtsenders, das in dem Überwachungsbereich von einem Objekt remittiert wird, beziehungsweise der Nutzwellenlängenbereich entspricht dem eigenen Lichtsignal. Das sich dem Nutzlichtanteil überlagernder Fremdlicht wird durch das Filterelement jedenfalls insoweit unterdrückt, wie es außerhalb des Nutzwellenlängenbereichs liegt.

Die Filterzonen sind bevorzugt ringförmig ausgebildet. Das passt sich an ein typisches konvergierendes oder divergierendes Empfangslichtbündel an, in dem die Empfangswinkel nur radial variieren und in Umfangsrichtung gleichbleiben, so dass ein Ring Lichtstrahlen eines zumindest in etwas gleichen Einfallswinkels erfasst. Ringe erstrecken sich vorzugsweise, aber nicht notwendig über 360°. Besonders bevorzugt bilden die Filterzonen eine Anordnung von konzentrischen Ringen, nochmals bevorzugt flächendeckend in dem Sinne, dass die Ringe lückenlos aneinander anschließen. Ein zentraler Kreis kann ebenfalls eine Filterzone bilden, diese Ausnahme kann vereinheitlichend als Ring mit innerem Radius Null verstanden werden.

Die Filterzonen weisen bevorzugt unterschiedliche Durchlassbereiche auf, deren Grenzen mit zunehmend flacherem Einfallswinkel des zugehörigen Teillichtbündels in eine langwellige Richtung verschoben sind. Flacherer Einfallswinkel ist so zu verstehen, dass die Teillichtbündel schräger, stärker von der Senkrechten abweichend einfallen. So wird der Verschiebung des Durchlassbereichs aufgrund flacherer Einfallswinkel entgegengewirkt, um effektiv in allen Filterzonen dasselbe Nutzlichtspektrum zu dem Lichtempfänger gelangen zu lassen.

Benachbarte Filterzonen weisen bevorzugt einander überlappende, in ihrer Wellenlänge zueinander verschobene Durchlassbereiche auf. Die Veränderung der Filtereigenschaften bei unterschiedlichen Empfangswinkeln ist meist nicht so groß, dass ein vollständig anderer Durchlassbereich entsteht, wobei das auch von der Breite des Durchlassbereichs abhängt. Es bedarf dann zwischen benachbarten Filterzonen teilweise überlappender Durchlassbereiche, damit sie an die tatsächlich innerhalb der Filterzonen auftretenden Einfallswinkel angepasst sind. Die Übergänge an den Rändern der Filterzonen können abrupt sein, es sind aber auch fließende Übergänge denkbar. Im Grenzfall unendlich vieler Filterzonen gibt es einen kontinuierlichen Verlauf des Durchlassbereichs beispielsweise in Abhängigkeit von dem Radius eines Strahlquerschnitts des Empfangslichts. Bevorzugt ist aber nur eine begrenzte, kleine Anzahl von Filterzonen vorgesehen, beispielsweise zwei, drei, vier, fünf oder höchstens zehn Filterzonen.

Die Steuer- und Auswertungseinheit ist bevorzugt dafür ausgebildet, aus einer Lichtlaufzeit zwischen Aussenden des Sendelichts und Empfangen des Empfangslichts einen Abstand des Objekts zu bestimmen. Damit entsteht ein entfernungsmessender Sensor, und es wird als Messinformation über das Objekt dessen Abstand bestimmt. Gerade bei hohen Reichweiten, viel Umgebungslicht und/oder schlecht remittierenden, dunklen Objekten ist der Nutzlichtanteil häufig sehr gering, so dass ein Lichtlaufzeitverfahren stark von der verbesserten Fremdlichtunterdrückung profitiert.

Der Sensor ist bevorzugt als Laserscanner ausgebildet und weist dafür eine bewegliche Ablenkeinheit zur periodischen Ablenkung des Sendelichts und vorzugsweise auch des Empfangslichts in dem Überwachungsbereich auf. So wird der Überwachungsbereich gegenüber einem eindimensionalen Sensor erheblich vergrößert, nämlich auf eine Abtastebene mit Winkelbereich von bis zu 360° und bei zusätzlicher Ablenkung in Elevation und/oder Verwendung mehrere in Elevation versetzten Abtaststrahlen sogar auf einen dreidimensionalen Raumbereich. Der Laserscanner nutzt vorzugsweise ein Lichtlaufzeitverfahren zur Abstandsmessung und erzeugt damit, unter Berücksichtigung der jeweiligen Winkel, unter denen das Sendelicht ausgesandt wird, 3D-Messpunkte innerhalb der Abtastebene oder sogar im Raum. Als Alternative ist der Sensor als Solid-State-LIDAR ausgebildet. Damit sind vergleichbare Flächen- oder Raumabtastungen möglich, dies aber ohne mechanisch bewegte Teile wie einen Drehspiegel oder einen rotierenden Messkopf, sondern unter Einsatz beispielsweise von MEMS-Bauteilen, einer Sender- und Empfängermatrix, eines Optical Phase Arrays oder dergleichen.

Das optische Filterelement ist bevorzugt als transmissives Filterelement ausgebildet, das einen der Abstimmung auf den Nutzlichtwellenlängenbereich entsprechenden Anteil des Empfangslichts zu dem Lichtempfänger hin passieren lässt. Das Filterelement kann in ein anderes optisches Bauteil integriert sein, beispielsweise an der Oberfläche einer Empfangslinse.

Die Empfangsoptik weist bevorzugt einen Faltspiegel auf, der das Empfangslicht auf den Lichtempfänger lenkt. Dadurch ist ein kompakterer Aufbau möglich, wie in der EP 4 071 504 A1 beispielhaft beschrieben, auf die ergänzend verwiesen wird. Der Faltspiegel wird so genannt, weil er die Funktion hat, den Empfangsstrahlengang zu falten, ihm also eine neue Richtung zu geben und ihn insbesondere wenigstens teilweise in sich selbst zurückzuführen. Dadurch können längere Lichtwege auf kleinerem Raum untergebracht werden.

Der Faltspiegel ist bevorzugt als flacher Spiegel ausgebildet. Damit hat der Faltspiegel nur die Funktion der Strahlumlenkung, die Strahlformung obliegt der vorgeordneten Empfangsoptik und möglichen nachgeordneten weiteren optischen Elementen. Der Faltspiegel weist vorzugsweise nur eine einzige Spiegelfläche auf, wobei mehrere separate Spiegelelemente in derselben Ebene mit gemeinsamer Wirkung eines flachen Spiegels, insbesondere sehr nahe beieinanderliegende Spiegelelemente, alternativ denkbar sind. Eine weitere denkbare Variante nutzt die Vorder- und Hinterseite eines Faltspiegels mit einem gegenseitigen Abstand von beispielsweise 1-2 mm. Ein flacher Faltspiegel, beispielsweise in Form eines planen Glasspiegels, kann sehr kostengünstig eine hochwertige optische Auslegung erreichen, so dass die Faltung des Empfangsstrahlengangs praktisch keine optischen Verluste mit sich bringt. Alternativ ist ein Faltspiegel mit strahlformenden Eigenschaften vorstellbar.

Der Faltspiegel ist bevorzugt derart ausgebildet und angeordnet, dass das Empfangslicht direkt in Richtung des Lichtempfängers gelenkt wird. Dies bedeutet, dass es nur einen einzigen Faltspiegel gibt und es nicht mehrerer Faltspiegel und damit Umlenkungen hintereinander bedarf, ehe das Empfangslicht in die neue Richtung zu dem Lichtempfänger geleitet ist. Das Empfangslicht aus dem Überwachungsbereich wird somit einmal von der Ablenkeinheit durch die Empfangsoptik zu dem Faltspiegel und dann von dem Faltspiegel zu dem Lichtempfänger gelenkt, weitere Richtungsänderungen des Empfangsstrahlengangs sind nicht vorgesehen. Zwischen Faltspiegel und Lichtempfänger sind optische Elemente wie das optische Filterelement, weitere Filter oder Blenden möglich, nicht aber in dieser Ausführungsform mit direkter Lenkung des Empfangslichts zusätzliche Umlenkelemente oder Spiegel.

Der Faltspiegel ist bevorzugt senkrecht zu dem darauf auftreffenden Strahlengang des Empfangslichts orientiert. Dabei stehen vorzugsweise eine Linsenebene einer als Empfangslinse ausgebildeten Empfangsoptik und der Faltspiegel zueinander parallel, noch bevorzugter auch die Empfängerebene des Lichtempfängers. Das auf den Faltspiegel auftreffende Empfangslicht wird somit zurückgeworfen oder, abgesehen von Toleranzen und dergleichen, um 180° umgelenkt. Durch einen Bündelungseffekt der Empfangsoptik ist nicht der Reflexionswinkel der einzelnen Strahlen des Empfangslichts 180°, es lässt sich aber eine gemeinsame Richtung des gesamten Strahlenbündels des Empfangslichts angeben, auf die das zutrifft, beispielsweise ein mittlerer Reflexionswinkel, oder man definiert es nochmals alternativ vorzugsweise über die Empfangsoptik, deren optische Achse senkrecht zu dem Faltspiegel steht.

Das optische Filterelement ist bevorzugt als reflexives Filterelement ausgebildet, das einen der Abstimmung auf den Nutzlichtwellenlängenbereich entsprechenden Anteil des Empfangslichts zu dem Lichtempfänger hin reflektiert. Es wurde oben schon erwähnt, dass ein solches reflexives Filterelement einen Durchlassbereich in dem Sinne aufweist, dass exklusiv das Nutzlicht reflektiert wird. Ein transmittierter Anteil wird vorzugsweise in einer Lichtfalle an der Rückseite absorbiert. Das reflexive Filterelement ist bevorzugt in einen ohnehin vorhandenen Spiegel integriert. Dafür kommen insbesondere der Faltspiegel oder ein Drehspiegel einer Ablenkeinheit eines Laserscanners in Betracht. Ferner ist denkbar, dass ein reflexives Filterelement und ein transmissives Filterelement in Kombination eingesetzt sind. So wird beispielsweise bereits an einem Faltspiegel selektiv Nutzlicht reflektiert, und im weiteren Strahlengang bis zu dem Lichtempfänger ist zusätzlich ein transmissives Filterelement angeordnet. Es können beide Filterelemente oder nur eines davon die erfindungsgemäßen Filterzonen aufweisen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Laserscanners hier in einer Ausführungsform mit Faltspiegel;
- Fig. 2: eine beispielhafte Darstellung des Empfangsstrahlengangs und eine beispielhafte Anordnung eines optischen Filters mit mehreren Filterzonen;
- Fig. 3: eine schematische Draufsicht auf ein optisches Filter mit mehreren ringförmigen Filterzonen;
- Fig. 4: eine Darstellung des Empfangsstrahlengangs ähnlich Figur 2 mit einem zusätzlichen reflexiven optischen Filter an dem Faltspiegel; und
- Fig. 5: eine beispielhafte Darstellung des Empfangspfades eines Solid-State-Lidars mit einem Filter mit mehreren Filterzonen.

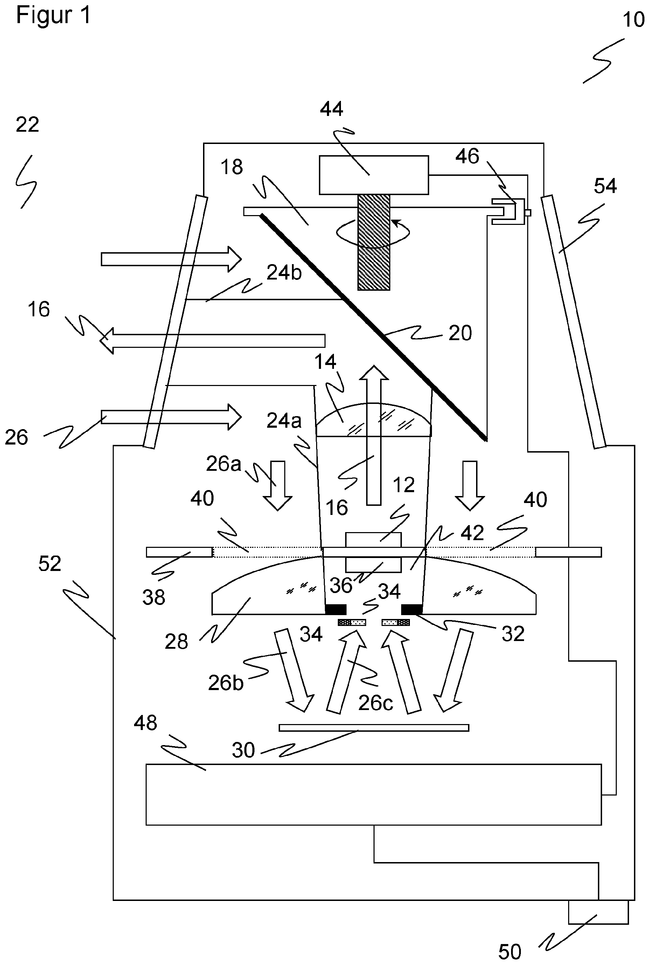

Figur 1 zeigt eine schematische Schnittdarstellung durch einen erfindungsgemäßen optoelektronischen Sensor in einer Ausführungsform als Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 mit einem flachen, in anderen Ausführungsformen auch gekrümmten Drehspiegel 20 in einen Überwachungsbereich 22 ausgesandt. Der Sendestrahlengang wird von einem ein- oder zweiteiligen Sendetubus 24a-b abgeschirmt. Zumindest der Teil 24b des Sendetubus' von der Ablenkeinheit 18 in den Überwachungsbereich 22 ist mit der Ablenkeinheit 18 mitbewegt.

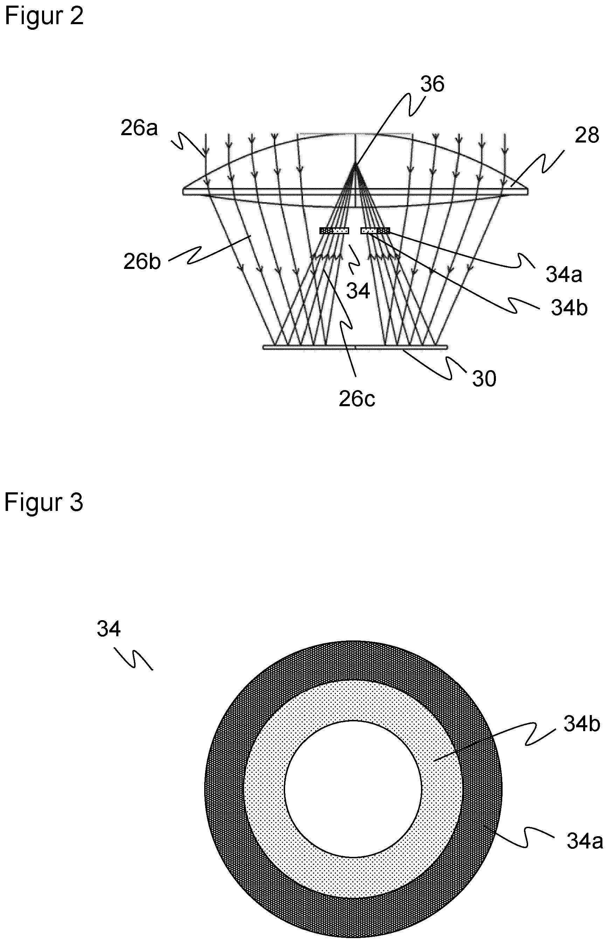

Trifft der Sendelichtstrahl 16 in dem Überwachungsbereich 22 auf ein Objekt, so gelangt Empfangslicht 26 mit dem remittierten Sendelicht wieder zu dem Laserscanner 10 zurück. Das Empfangslicht 26 wird in dem Laserscanner 10 mehrfach umgelenkt und strahlgeformt und erhält zur besseren Unterscheidbarkeit jeweils ein unterschiedliches Bezugszeichen. Die Ablenkeinheit 18 lenkt das Empfangslicht 26a zunächst zu einer Empfangsoptik 28 um. Das dort strahlgeformte oder gebündelte Empfangslicht 26b fällt auf einen Faltspiegel 30. Das von dem Faltspiegel 30 zurückgeworfene Empfangslicht 26c trifft dann durch eine Blende 32 und nach Passieren eines optischen Filters 34, das auf die Wellenlänge des Lichtsenders 12 abgestimmt ist, auf einen Lichtempfänger 36. Das optische Filter 34 weist mindestens zwei durch unterschiedliche Schraffierungen angedeutete Filterzonen auf und wird später unter Bezugnahme auf die Figuren 2 und 3 näher erläutert. Die Reihenfolge von Blende 32 und Filter 34 kann umgekehrt werden. Der Lichtempfänger 36 wandelt das hier einfallende Empfangslicht 26c in ein elektrisches Empfangssignal und weist beispielsweise mindestens eine Photodiode oder für höhere Empfindlichkeit mindestens eine Lawinenphotodiode (APD) beziehungsweise eine Anordnung mit mindestens einer Einzelphotonlawinendiode (SPAD, SiPM) auf.

Lichtsender 12 und Lichtempfänger 36 sind in der dargestellten Ausführungsform auf einer gemeinsamen Leiterkarte 38 angeordnet, die eine Aussparung 40 für den Durchtritt des Empfangslichts 26a aufweist. Alternativ sind jeweils eigene Leiterkarten denkbar. Die Empfangsoptik 28 weist eine zentrale Öffnung 42 auf, in der Blende 32, optisches Filter 34 und der Lichtempfänger 36 untergebracht sind. In alternativen Ausführungsformen kann der Lichtempfänger 36 unterhalb der Empfangsoptik 28 angeordnet sein, die dann nicht notwendig noch eine zentrale Öffnung 42 aufweist. Statt der zentralen Öffnung 42 kann die Empfangsoptik 28 in ihrem Zentrum ein weiteres strahlformendes Element aufweisen. Insbesondere bildet dann die dargestellte Empfangsoptik 28 eine äu-ßere Zone für das Empfangslicht 26a auf dem Hinweg und das strahlformende Element eine innere Zone für das Empfangslicht 26c auf dem Rückweg nach Reflexion an dem Faltspiegel 30.

Die Ablenkeinheit 18 mit dem Drehspiegel 20 wird von einem Motor 44 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 46 angeordnet, um die jeweilige Winkelstellung der Ablenkeinheit 18 zu erfassen. Die Winkelmesseinheit 46 wird hier beispielhaft von einer Strichscheibe als Winkelmaßverkörperung und einer Gabellichtschranke als Abtastung gebildet.

Eine Steuer- und Auswertungseinheit 48 ist mit dem Lichtsender 12, dem Lichtempfänger 36, dem Motor 44 und der Winkelmesseinheit 46 verbunden, insbesondere durch Verbindungen zwischen Leiterkarten mit der jeweiligen Elektronik. Die Steuer- und Auswertungseinheit 48 weist mindestens einen Rechenbaustein auf, wie einen Mikroprozessor oder eine CPU (Central Processing Unit), ein FPGA (Field Programmable Gate Array), einen DSP (Digital Signal Processor), ein ASIC (Application-Specific Integrated Circuit), einen KI-Prozessor, eine NPU (Neural Processing Unit), eine GPU (Graphics Processing Unit), eine VPU (Video Processing Unit) oder dergleichen. Durch Bestimmen der Lichtlaufzeit zwischen Aussenden des Sendelichtstrahls 16 und Empfang von Empfangslicht 26 wird unter Verwendung der Lichtgeschwindigkeit auf die Entfernung eines angetasteten Objektes von dem Laserscanner 10 geschlossen. Die jeweilige Winkelstellung, unter welcher dabei der Sendelichtstrahl 16 ausgesandt wurde, ist der Auswertungseinheit 48 von der Winkelmesseinheit 46 bekannt.

Somit stehen nach jeder Scanperiode über den Winkel und die Entfernung zweidimensionale Polarkoordinaten der Objektpunkte in dem Überwachungsbereich 22 zur Verfügung, und entsprechende Messdaten können über eine Schnittstelle 50 übertragen werden, wobei die Schnittstelle 50 stellvertretend für eine oder mehrere Schnittstellen steht. Die Schnittstelle 50 kann umgekehrt für eine Parametrierung oder sonstigen Datenaustausch zwischen Laserscanner 10 und Außenwelt genutzt werden. Die Schnittstelle 50 kann für die Kommunikation in einem oder mehreren herkömmlichen Protokollen ausgelegt sein, wie IO-Link, Ethernet, Profibus, USB3, Bluetooth, WLAN, LTE, 5G und vielen weiteren. Bei Anwendungen in der Sicherheitstechnik kann die Schnittstelle 50 sicher ausgebildet, insbesondere ein sicherer Ausgang (OSSD, Output Signal Switching Device) für ein sicherheitsgerichtetes Abschaltsignal bei Erkennen einer Schutzfeldverletzung sein. Der Laserscanner 10 ist in einem Gehäuse 52 untergebracht, das eine umlaufende Frontscheibe 54 insbesondere in Form einer Art transparenten Haube aufweist, die den oberen Teil des Gehäuses 52 bildet.

Figur 2 zeigt eine vergrößerte Darstellung des Empfangsstrahlengangs in dem Laserscanner 10. Während das Empfangslicht 26a anfangs zumindest bei nicht ganz kurzen Abständen des angetasteten Objekts näherungsweise parallel verläuft, ist das strahlgeformte oder gebündelte Empfangslicht 26b ebenso wie das von dem Faltspiegel 30 zurückgeworfene Empfangslicht 26c deutlich konvergent. Somit treffen die Lichtstrahlen in unterschiedlichen Einfallswinkeln auf das Filter 34, in der gezeigten Konstellation in einem äußeren Bereich mit einem flacheren, also weniger senkrechten Einfallswinkel als in dem inneren Bereich. Das Filter 34, insbesondere ein dielektrisches spektrales Filter, weist einen spektralen Durchlassbereich auf, der sich je nach Einfallswinkel verschiebt. Ohne Kompensationsmaßnahmen wäre der Durchlassbereich außen kurzwelliger, im Vergleich zu den eher senkrecht einfallenden Lichtstrahlen im inneren Bereich.

Im Stand der Technik würde nun eine Reserve berücksichtigt, das Filter 34 erhielte also einen breiteren Durchlassbereich, um das Empfangslicht 26c für alle auftretenden Einfallswinkel durchzulassen.

Erfindungsgemäß weist das Filter stattdessen zwei Filterzonen 34a-b oder in anderen Ausführungsformen auch mehr Filterzonen auf, deren Durchlassbereiche zueinander verschoben und in sich schmal sind, also keine Reserve für sämtliche über den Empfangsstrahlengang auftretenden Einfallswinkel aufweisen. Die Verschiebung ist so gewählt, dass der Durchlassbereich jeweils zu den Einfallswinkeln passt, die innerhalb der jeweiligen Filterzone 34a-b auftreten. Der Durchlassbereich einer äußeren Filterzone 34a ist also gegenüber einer inneren Filterzone 34b in einer zu der Änderung des Einfallswinkels passenden Weise langwellig verschoben. Damit kann der Nutzlichtanteil des Empfangslichts 26c das Filter 34 weiterhin überall passieren. Der Fremdlichtanteil wird aber sehr selektiv ausgefiltert, da jede Filterzone 34a-b nur einen schmalen, an Nutzlicht im auf dieser Filterzone 34a-b auftreffenden Einfallswinkelbereich angepassten Durchlassbereich aufweist. Wenn die Filterzonen 34a-b hinreichend fein sind, ist die Abhängigkeit des Durchlassbereichs vom Einfallswinkel praktisch aufgehoben. Mit einer endlichen Zahl von Filterzonen 34a-b wird dies näherungsweise erreicht, wobei eine Abwägung zwischen einem aufwändigen Filter 34 und einem besonders schmalen Durchlassbereich zu treffen ist. In der Praxis bewähren sich bereits zwei oder jedenfalls wenige Filterzonen 34a-b. Von Filterzone 34a-b zu Filterzone 34a-b können sich die Durchlassbereiche sprunghaft oder diskret ändern, es ist aber auch ein kontinuierlicher Übergang denkbar. Prinzipiell wäre auch ein kontinuierlicher Übergang über die gesamte relevante, hier radiale Ausdehnung des Filters 34 denkbar, was einem Grenzfall unendlich vieler Filterzonen 34a-b entspricht.

Fig. 3 zeigt eine schematische Draufsicht auf ein optisches Filter 34 mit mehreren ringförmigen Filterzonen 34a-b. Diese Geometrie ist für ein Strahlenbündel wie dasjenige der Figur 2 besonders geeignet, dessen Radialsymmetrie in der Schnittdarstellung der Figur 2 nicht unmittelbar erkennbar ist. Aufgrund des Aufbaus des Laserscanners 10 gemäß Figur 1 ist innen ein Freibereich vorgesehen, der einer Abschattung durch den Lichtsender 12 entspricht. Eine Filterzone an dieser Stelle ist unnötig, weil hier ohnehin kein Empfangslicht 26c auftritt. In anderen Konfigurationen eines optoelektronischen Sensors können mehr Ringe einschließlich eines inneren Kreises vorgesehen sein. Die Erfindung ist auch nicht auf ringförmige Filterzonen 34a-b beschränkt, dies ist nur häufig eine gute Anpassung an die auftretenden Einfallswinkel. Andere Muster der Filterzonen 34a-b für andere Strahleigenschaften des Empfangslichts oder auch beispielsweise zur konstruktiven Vereinfachung sind dadurch aber nicht ausgeschlossen. Das Filter 34 kann ein eigenes Bauteil sein wie dargestellt. Alternativ wird es auf eine Fläche aufgebracht, die ohnehin im Optikpfad vorhanden ist, wie eine Linse, einen Spiegel oder ein sonstiges optisches Element.

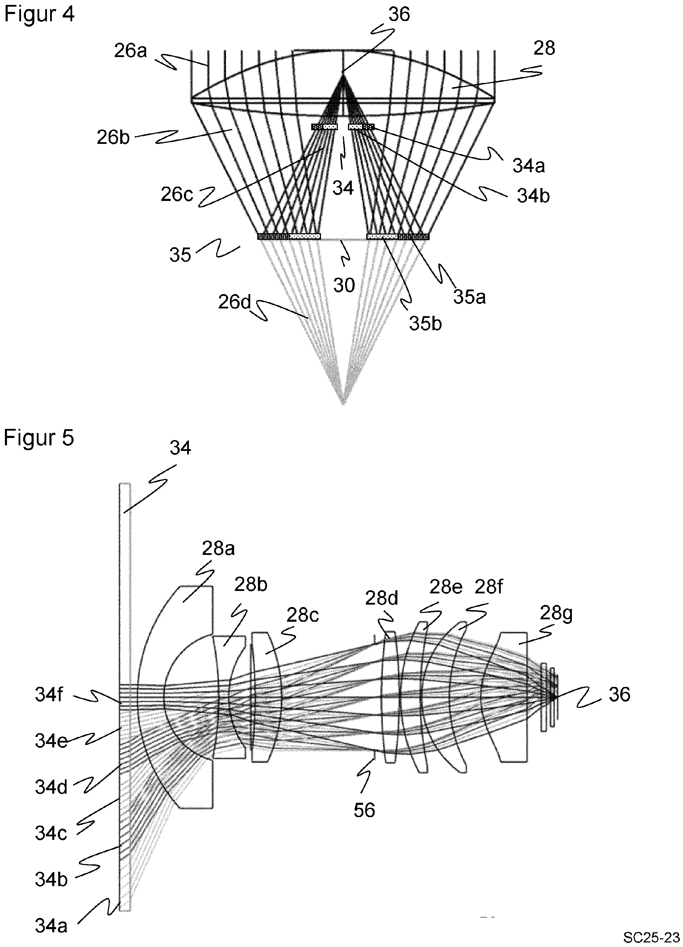

Figur 4 ist eine Darstellung des Empfangsstrahlengangs ähnlich Figur 2, wobei hier zusätzlich in höherem grau ein hinter dem Faltspiegel 30 fortgesetzter Strahlengang eines transmittierten Anteils 26d gezeigt ist. Daran soll eine weitere Ausführungsform illustriert werden, in denen ein das optische Filter 35 nun reflexiv statt transmissiv ausgestaltet ist. In der gezeigten Ausführungsform ist das optische Filter 35 mit dem Faltspiegel 30 kombiniert, in anderen Ausführungsformen kann ein reflexives optisches Filter 35 als eigenes Bauteil oder an einem anderen Bauteil wie beispielsweise dem Drehspiegel 20 vorgesehen sein. Da an dem Drehspiegel 20 die Einfallswinkel ohnehin wenig variieren, sind hier nicht unbedingt mehrere Filterzonen erforderlich, aber möglich. Eine bevorzugte Ausführungsform kombiniert ein Filter an dem Drehspiegel 20 mit einem Filter 35 an dem Faltspiegel 30. Es sind zudem beliebige Kombinationen von einem Filter an dem Drehspiegel 20, eines reflexiven Filters 35 insbesondere an dem Faltspiegel und eines transmissiven Filters 34 denkbar. Zur Illustration dieser Option ist das transmissive Filter 34 in Figur 4 zusätzlich zu dem reflexiven Filter 35 weiterhin vorhanden

Der Durchlassbereich des Filters 35 beziehungsweise von dessen Filterzonen 35a-b ist im reflexiven Fall etwas anders zu verstehen, es ist genaugenommen ein schmalbandiger spektraler Reflexionsbereich, der aber zur sprachlichen Vereinfachung ebenfalls Durchlassbereich genannt wird, und zwar in dem Sinne, dass nun gerade der reflektierte Anteil zu dem Lichtempfänger 36 gelangt, also durchgelassen wird. Der transmittierte Anteil 26d unter beziehungsweise hinter dem Faltspiegel 30 sollte absorbiert werden, etwa durch eine nicht gezeigte Strahlfalle oder schwarze Fläche, damit möglichst keine Rückstreuung doch noch zu dem Lichtempfänger 26 Detektor gelangt.

Figur 5 zeigt eine beispielhafte Darstellung des Empfangspfades eines Solid-State-Lidars mit einem Filter 34 mit mehreren Filterzonen 34a-f und einem Lichtempfänger 36 mit einer Matrixanordnung von Lichtempfangselementen oder Pixeln. Die Empfangsoptik weist hier eine Vielzahl von Linsen 28a-g als Beispiel eines komplexeren Objektivs auf. Reflexive Alternativen, mehr oder weniger Linsen sowie zusätzliche optische Elemente bleiben möglich. Ein solcher Empfangspfad ist auch nicht auf ein Solid-State-Lidar beschränkt, sondern kann in anderen optoelektronischen Sensoren ebenfalls auftreten.

Das Empfangslicht kann, wie mit unterschiedlichen Grauschattierungen angedeutet, als mehrere Teillichtbündel verstanden werden, die jeweils einer Filterzone 34a-f zugeordnet sind. Aufgrund des Optikdesigns fällt Empfangslicht, das letztlich einen bestimmten Bereich der Matrixanordnung des Lichtempfängers 36 trifft, auf dem Filter 34 auf einen begrenzten zugeordneten Bereich. Durch eine Blende 56 ist das auch winkelselektiv, d.h. Licht, das an anderer Stelle unter demselben Einfallswinkel auf das Filter 34 trifft, wird durch die Blende 56 abgeblockt. Jede Filterzone 34a-f ist damit für ein Teillichtbündel eines bestimmten Empfangswinkels zuständig. Damit können analog zu den Erläuterungen zu den Figuren 2 und 3 den Filterzonen 34a-f zueinander verschobene Durchlassbereiche zugewiesen werden, die ganz eng an das Nutzlichtspektrum und den zugeordneten Empfangswinkel angepasst sind. Die gezeigte Position des Filters 34 ist wiederum beispielhaft zu verstehen. Eine Position ganz rechts vor dem Lichtempfänger 36 beispielsweise hat den Vorteil, dass ein kleineres Filter 34 ausreicht, das aber mit einer viel größeren Divergenz von Einfallswinkeln auf sehr engem Raum zurechtkommen muss. Bei anderem Optikaufbau ist auch ein reflexives Filter denkbar.

## Patentansprüche

1. Optoelektronischer Sensor (10) zur Erfassung von Objekten in einem Überwachungsbereich (22), der einen Lichtempfänger (36) zum Erzeugen eines Empfangssignals aus Empfangslicht (26) aus dem Überwachungsbereich (22), eine Empfangsoptik (28) zum Lenken des Empfangslichts (26) auf den Lichtempfänger (36) mit einem auf einen Nutzlichtwellenlängenbereich abgestimmten optischen Filterelement (34, 35) zur Unterdrückung von Fremdlicht und eine Steuer- und Auswertungseinheit (48) zur Erfassung von Informationen über Objekte in dem Überwachungsbereich (22) anhand des Empfangssignals aufweist, **dadurch gekennzeichnet,**
**dass** das optische Filterelement (34, 35) mindestens zwei Filterzonen (34a-b, 35a-b) aufweist und dass eine jeweilige Filterzone (34a-b, 35a-b) in ihrer Abstimmung auf den Nutzlichtwellenlängenbereich individuell an den Einfallswinkel eines Teillichtbündels des Empfangslichts (26) auf die Filterzone (34a-b, 35a-b) angepasst ist.

2. Sensor (10) nach Anspruch 1,
wobei das optische Filterelement (34, 35) ein Bandpassfilter ist.

3. Sensor (10) nach Anspruch 1 oder 2,
wobei eine jeweilige Filterzone (34a-b, 35a-b) einen Durchlassbereich mit einer Halbwertsbreite von höchstens 20 nm oder höchstens 10 nm aufweist.

4. Sensor (10) nach einem der vorhergehenden Ansprüche,
der einen Lichtsender (12) zum Aussenden eines Lichtsignals (16) in den Überwachungsbereich (22) mit einer Wellenlänge in dem Nutzlichtwellenlängenbereich aufweist.

5. Sensor (10) nach einem der vorhergehenden Ansprüche,
wobei die Filterzonen (34a-b, 35a-b) ringförmig ausgebildet sind, insbesondere eine jeweilige Filterzone (34a-b, 35a-b) einen von mehreren konzentrischen Ringen bildet.

6. Sensor (10) nach einem der vorhergehenden Ansprüche,
wobei die Filterzonen (34a-b, 35a-b) unterschiedliche Durchlassbereiche aufweisen, deren Grenzen mit zunehmend flacherem Einfallswinkel des zugehörigen Teillichtbündels in eine langwellige Richtung verschoben sind.

7. Sensor (10) nach einem der vorhergehenden Ansprüche,
wobei benachbarte Filterzonen (34a-b, 35a-b) einander überlappende, in ihrer Wellenlänge zueinander verschobene Durchlassbereiche aufweisen.

8. Sensor (10) nach einem der vorhergehenden Ansprüche,
wobei die Steuer- und Auswertungseinheit (48) dafür ausgebildet ist, aus einer Lichtlaufzeit zwischen Aussenden des Sendelichts (16) und Empfangen des Empfangslichts (26) einen Abstand des Objekts zu bestimmen.

9. Sensor (10) nach einem der vorhergehenden Ansprüche,
der als Laserscanner ausgebildet ist und dafür eine bewegliche Ablenkeinheit (18, 20) zur periodischen Ablenkung des Sendelichts (16) in dem Überwachungsbereich (22) aufweist.

10. Sensor (10) nach einem der vorhergehenden Ansprüche,
wobei das optische Filterelement (34) als transmissives Filterelement ausgebildet ist, das einen der Abstimmung auf den Nutzlichtwellenlängenbereich entsprechenden Anteil des Empfangslichts (26) zu dem Lichtempfänger (36) hin passieren lässt.

11. Sensor (10) nach einem der vorhergehenden Ansprüche,
wobei die Empfangsoptik (28) einen Faltspiegel (30) aufweist, der das Empfangslicht (26) auf den Lichtempfänger (36) lenkt.

12. Sensor (10) nach einem der Ansprüche 1 bis 9 oder 11,
wobei das optische Filterelement (35) als reflexives Filterelement (35a-b) ausgebildet ist, das einen der Abstimmung auf den Nutzlichtwellenlängenbereich entsprechenden Anteil des Empfangslichts (26) zu dem Lichtempfänger (36) hin reflektiert.

13. Verfahren zur Erfassung von Objekten in einem Überwachungsbereich (22), bei dem eine Empfangsoptik (28) Empfangslicht (26) aus dem Überwachungsbereich (22) auf einen Lichtempfänger (36) lenkt und der Lichtempfänger (36) aus dem Empfangslicht (26) ein Empfangssignal erzeugt, wobei ein auf einen Nutzlichtwellenlängenbereich abgestimmtes optisches Filterelement (34, 35) Fremdlicht in dem Empfangslicht (26) unterdrückt, und wobei das Empfangssignal ausgewertet wird, um Informationen über Objekte in dem Überwachungsbereich (22) zu bestimmen,
**dadurch gekennzeichnet,**
**dass** das optische Filterelement (34, 35) mindestens zwei Filterzonen (34a-b, 35a-b) aufweist und dass eine jeweilige Filterzone (34a-b, 35a-b) in ihrer Abstimmung auf den Nutzlichtwellenlängenbereich individuell an den Einfallswinkel eines Teillichtbündels des Empfangslichts (26) auf die Filterzone (34a-b, 35a-b) angepasst ist.
